# EUROPEAN PATENT APPLICATION

(11) **EP 2 173 018 A1**
(43) Date of publication of application: **07.04.2010**
(21) Application number: 08790248.2
(22) Date of filing: 22.07.2008
(51) Int. Cl.: H02J 7/34, B60L 3/00, B60L 7/20, B60L 11/18, H01M 10/44, H02J 7/00

(54) **ELECTRIC POWER SOURCE DEVICE FOR VEHICLE**

(30) Priority: 25.07.2007 JP 2007192807
(71) Applicant: Panasonic Corporation, Kadoma-shi Osaka 571-8501 (JP)
(72) Inventor: HANDA, Hiroyuki, Osaka-shi Osaka 540-6207 (JP); NISHIO, Tsuyoshi, Osaka-shi Osaka 540-6207 (JP); TAKAMURA, Kimitake, Osaka-shi Osaka 540-6207 (JP); NODA, Muneyoshi, Osaka-shi Osaka 540-6207 (JP); SUGIE, Kazuhiro, Osaka-shi Osaka 540-6207 (JP); NAKANISHI, Yuuki, Osaka-shi Osaka 540-6207 (JP)
(74) Representative: Kügele, Bernhard
(86) International application number: PCT/JP2008/001946
(87) International publication number: WO 2009/013891

(57) **Abstract**

An electric power source device is used in a vehicle equipped with a generator and a battery. The device includes a current detector for detecting a first current flowing in the battery, a DC-DC converter, a capacitor connected to the generator via the DC-DC converter, and a controller. The controller determines the state of charge of the battery based on a first input current detected by the current detector, and detects the running condition of the vehicle. When the vehicle decelerates, the controller controls, based on the determined state of charge of the battery, a second input current input to the capacitor via the DC-DC converter. Thereby, a regenerative electric power generated by the generator is used during the deceleration of the vehicle according to the SOC, thus utilizing the energy that is not conventionally.

## Description

### TECHNICAL FIELD

The present invention relates to an electric power source device for vehicle, which stores regenerative electric power generated actively by a generator while the vehicle decelerates, and supplies the stored power to loads except during deceleration, that is, while the vehicle stops, starts up, runs, or accelerates.

### BACKGROUND ART

Concern for protection of global environment in recent years facilitates require reducing carbon dioxide emissions through an improvement in fuel efficiency especially in automobiles (hereinafter referred to as vehicles). Various techniques have been made to improve fuel efficiency in vehicles. One of the techniques is that regenerative electric power generated while the vehicle decelerates is stored and supplied to loads while the vehicle stops, stars up, runs, or accelerates.

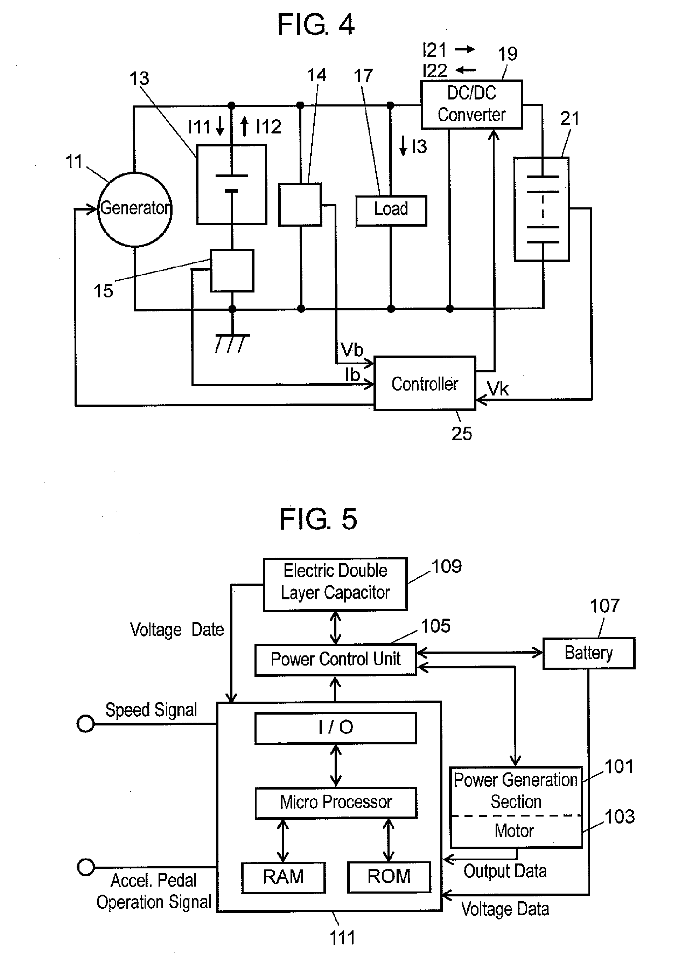

An electric power source device for a vehicle, such as a hybrid electric vehicle, that is driven by a motor is shown in Fig. 5.

Fig. 5 is a schematic circuit block diagram of the electric power source device. Power generation section (an electric generator according to the present invention) 101 is accommodated in motor 103 for vehicle. Power generation section 101 is connected to rechargeable battery 107 and electric double layer capacitor 109 via power control unit 105.

Controller 111 receives output data from power generation section 101, voltage data from rechargeable battery 107 and electric double layer capacitor 109, and a vehicle speed signal and an accelerator pedal operation signal from the vehicle. Controller 111 controls power control unit 105 and includes a microprocessor and a peripheral circuit (an I/O, a RAM, and a ROM).

An operation of the electric power source device will be described below. Upon detecting braking of the vehicle from the vehicle speed signal and the gas pedal operation signal, controller 111 controls power control unit 105 to supply regenerative electric power generated by power generation section 101 to electric double layer capacitor 109.

Electric double layer capacitor 109 has rapid charge-discharge characteristics, and stores electrical energy efficiently when the amount of electric power generation increases during a short time such as during braking of the vehicle. Then, the electric power source device supplies the electric power stored in electric double layer capacitor 109 preferentially to motor 103 while the vehicle runs, and supplies the electric power in electric double layer capacitor 109 to rechargeable battery 107 while the vehicle stops. Thus, the electric power source device provides high power recovery efficiency (ref. Patent Document 1).

In conventional vehicles driven by engines, the regenerative electric power generated by the generator is stored in an electric double layer capacitor while the vehicle decelerates, and releases the power stored in the electric double layer capacitor except during deceleration (ref. Patent Document 2).
Patent Document 1: JP2002-238108A
Patent Document 2: Japanese Patent No.3465293

### SUMMARY OF THE INVENTION

An electric power source device for vehicle for vehicle is used in a vehicle including a generator and a battery and includes a current detector for detecting a first current flowing to the battery, a DC-DC converter, a capacitor connected to the generator via the DC-DC converter, and a controller.

The controller determines a state of charge (SOC) of the battery based on the first current detected by the current detector, detects a running condition of the vehicle, and controls, according to the based on the determined SOC of the battery, a second current input to the capacitor via the DC-DC converter while the vehicle decelerates.

A regenerative electric power generated by the generator is used during the deceleration of the vehicle according to the SOC as to utilize energy that is conventionally utilized.

### BRIEF DESCRIPTION OF THE DRAWINGS

Fig. 1 is a schematic circuit block diagram of an electric power source device for vehicle according to Exemplary Embodiment 1 of the present invention.
Fig. 2 is a characteristic diagram of a battery according to Embodiment 1 of the invention for illustrating the change of current charging the battery depending on a state of charge (SOC) of the battery
Fig. 3 is a flowchart showing an operation of the electric power source device for vehicle according to Embodiment 1the invention.
Fig. 4 is a schematic circuit block diagram of an electric power source device for vehicle according to Exemplary Embodiment 2 of the invention.
Fig. 5 is a schematic circuit block diagram of a conventional electric power source device.

### DETAILED DESCRIPTION OF PREFERRED EMBODIMENT

An electric power source device for vehicle according to exemplary embodiments of the present invention will be described below with reference to drawings.

### EXEMPLARY EMBODIMENT 1

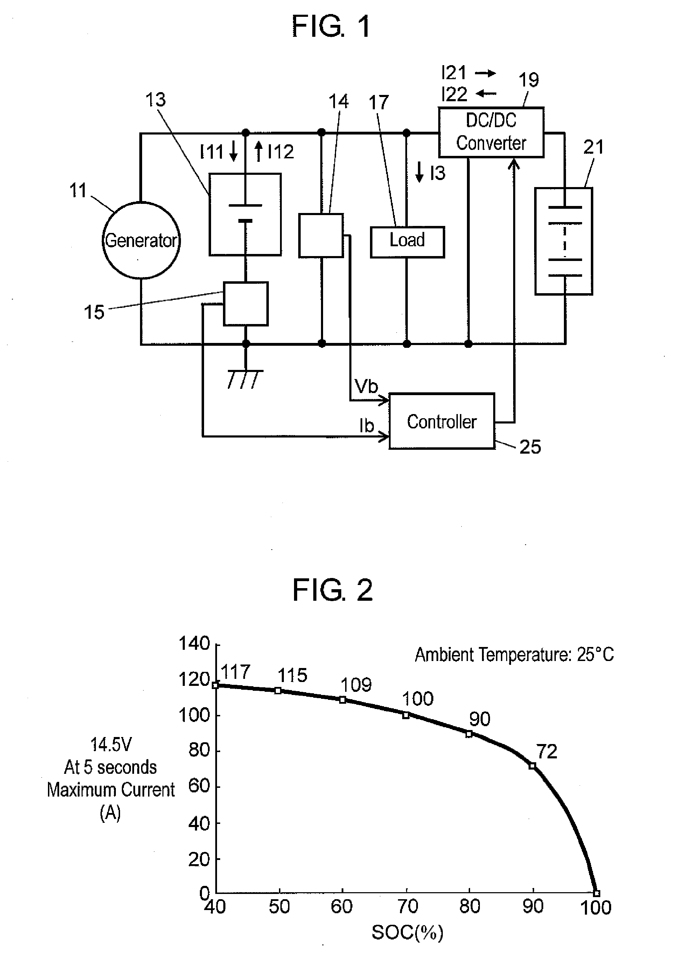

Fig. 1 is a schematic circuit block diagram of an electric power source device for vehicle according to Exemplary Embodiment 1 of the present invention.

As shown in Fig. 1, generator 11 is mechanically coupled to an engine (not shown) of a vehicle and generates electric power by the rotation of the engine. Battery 13 and current detector 15 are connected in series with each other and further connected in parallel with generator 11 at their other ends. Battery 13 may often be a lead-acid battery because of its low cost and a large capacity, but may alternatively be a lithium secondary battery.

Current detector 15 detects first currents input to and output from battery 13: a first input current (current I11) input to battery 13 and a first output current (current I12) output from battery 13.

Generator 11 is connected in parallel with load 17 of the vehicle. Load 17 includes a starter, an auxiliary electric device, a navigation system, and a car audio. Generator 11 is also connected to capacitor 21 via DC-DC converter 19.

DC-DC converter 19 controls the direction and the current value of a current. DC-DC converter 19 switches the direction of the current flowing through DC-DC converter 19 to control input and output f capacitor 21. Second currents flow in capacitor 21 via DC-DC converter 19. A second input current I21 flows to capacitor 21 via DC-DC converter 19. A second output current I22 flows from capacitor 21 via DC-DC converter 19. The current input to capacitor 21 is controlled by controlling a current input to DC-DC converter 19.

DC-DC converter 19 can include a circuit only performing an input and a circuit only performing an output. DC-DC converter 19 can be a single bi-directional circuit performing an input and output. DC-DC converter 19 mounted in the vehicle is preferably the bi-directional circuit to have a small size.

Capacitor 21 is implemented by a device which can be charged and discharged. In the case that battery 13 is a lead-acid battery, capacitor 21 is preferably an electric double layer capacitor, which can receive and output a large current although this capacitor has a smaller energy density and a smaller capacity than the lead-acid battery. The optimum combination of battery 13 and capacitor 21 is determined based on conditions, such as the ability of generator 11 to generate the regenerative electric power and the sizes of battery 13, capacitor 21, and the vehicle on which to mount them.

The ratio of the capacity of battery 13 to the capacity of capacitor 21 is determined according to the requirements of the design of the vehicle. It was confirmed that the ratio of the capacity of the lead-acid battery 13 to the capacity of the electric double layer capacitor was 100 for provided a preferable result.

Controller 25 is implemented by an electronic control device including a CPU, a RAM, and a ROM. Controller 25 controls DC-DC converter 19 by determining the state of charge (SOC) of battery 13 based on data, such as voltage Vb of generator 11 and battery 13, and data, such as input current Ib input to battery 13 detected by current detector 15. Voltage Vb of battery 13 is detected by voltage detector 14, whose method of detection is not limited as long as it can detect the voltage of battery 13.

Controller 25 also detects the running condition of the vehicle, such as stopping, accelerating, running, and decelerating, and achieves total optimization of generator 11 generating power, battery 13 and capacitor 21 for temporarily storing the power, and load 17 consuming the power. The function performed by controller 25 can be performed by an electronic circuit.

The electric power source device for vehicle according to the embodiment will be briefly described below. In order to improve the fuel efficiency of vehicles, various suggestions have been made for the energy generated during the deceleration of the vehicles that has been lost as heat to be recovered as regenerative electric power using generator 11 connected to the engine (not shown). Lead-acid batteries widely used as battery 13 for vehicle, however, cannot absorb the regenerative electric power. The regenerative electric power is the product of a voltage rapidly rising in a short time and a large current, and is generated by generator 11. The lead-acid batteries can not absorb the regenerative electric power since the batteries utilize a chemical reaction to store energy.

The regenerative electric power is supplied to capacitor 21 via DC-DC converter 19. As described above, capacitor 21 is an electric double layer capacitor suitable to absorb the regenerative electric power which is the product of a voltage rapidly rising in a short time and a large current.

The instantaneous electric power that capacitor 21 can receive is limited according to the ability of DC-DC converter 19 to supply the electric power. Therefore, the ability of generator 11 generating electric power preferably matches with the ability of DC-DC converter 19 to supply the power to capacitor 21. This can prevent an excessive voltage from being applied to battery 13 even if generator 11 has a high ability to generate electric power.

The regenerative electric power generated during the deceleration of the vehicle and stored in capacitor 21 is supplied to load 17 or battery 13 via DC-DC converter 19 when the vehicle stops, starts up, runs, or accelerates, except decelerating.

It is important that the regenerative electric power is supplied to battery 13 according to the SOC. This operation will be described below with reference to Fig. 2.

Fig 2 is a characteristic diagram showing the change in the SOC and the current value of a current that can be input to an ordinary lead-acid battery i.e., that is accepted by the battery, in five seconds after a voltage of 14.5V is applied to the lead-acid battery at an ambient temperature of 25°C.

The SOC represents a ratio of a residual capacity of the lead-acid battery to a rated capacity (the product of discharging current and discharge time, unit: Ah) of the battery after the battery which is charged with the rated capacity is discharged with a predetermined current for a predetermined period of time. For example, a lead-acid battery having a rated capacity of 50 Ah is discharged for one hour at with a current of 10A, thus having a residual capacity 40 Ah. At this moment, the lead-acid battery has a residual capacity of 40Ah, which is obtained by subtracting 10 Ah from 50 Ah, thus defining the SOC of the battery as 80% (=40 Ah/50 Ah).

As shown in Fig. 2, when the SOC is about 100%, the current that can be input to a lead-acid battery is about 0A, indicating that the lead-acid battery cannot accept any more regenerative electric power. Upon being charged at a voltage over 14.5V, a lead-acid battery causes the electrolysis of an electrolytic solution in the battery, producing gas and causing a charge loss, and hence, having an adverse effect on the life time of the lead-acid battery. A lead-acid battery including a regulator valve to be mounted particularly to vehicles, upon being charged at an excessive voltage, has a substantial adverse effect on its life time.

As shown in Fig. 2, as the SOC decreases, a current that the lead-acid battery can accept increases. Lead-acid batteries, however, decrease their durability to receiving and supplying electric power when the SOC decreases excessively In order to prevent such excessive decrease of the SOC, the following lead-acid batteries are developed: a lead-acid battery including a separator made of glass fiber or acid-resistant resin fiber in the form of a mat; a lead-acid battery with an electrolytic solution transformed into a gel form by adding additive, such as SiO₂; and a lead-acid battery with a negative electrode active material, such as 0.2 wt% to 3.0 wt% of conductive carbon. These batteries can be used as battery 13.

A lead-acid battery as battery 13 has been conventionally used at near full charge by continuously supplying electric power to the battery. In recent years, however, as a stop-idling system is presented to protest global warming or as an improvement in fuel efficiency of vehicles, drivers stop engines of vehicles when the vehicles do not move, thus disabling electric power to be supplied. In such conditions, battery 13 is charged and discharged frequently and repetitively since load 17, such as a navigation system and an air conditioner, does not stop even when the engines stop idling.

The device according to the embodiment frequently detects the SOC, and supplies electric power upon detecting the decrease of the SOC, thereby reducing the power generation of generator 11 or allowing generator 11 to stop. This operation reduces load on the engines, thereby improving the fuel efficiency of the vehicles. Furthermore, the device maintains a voltage applied to battery 13 at a predetermined voltage to avoid an excessive voltage, thereby providing the lead-acid battery with a long life time.

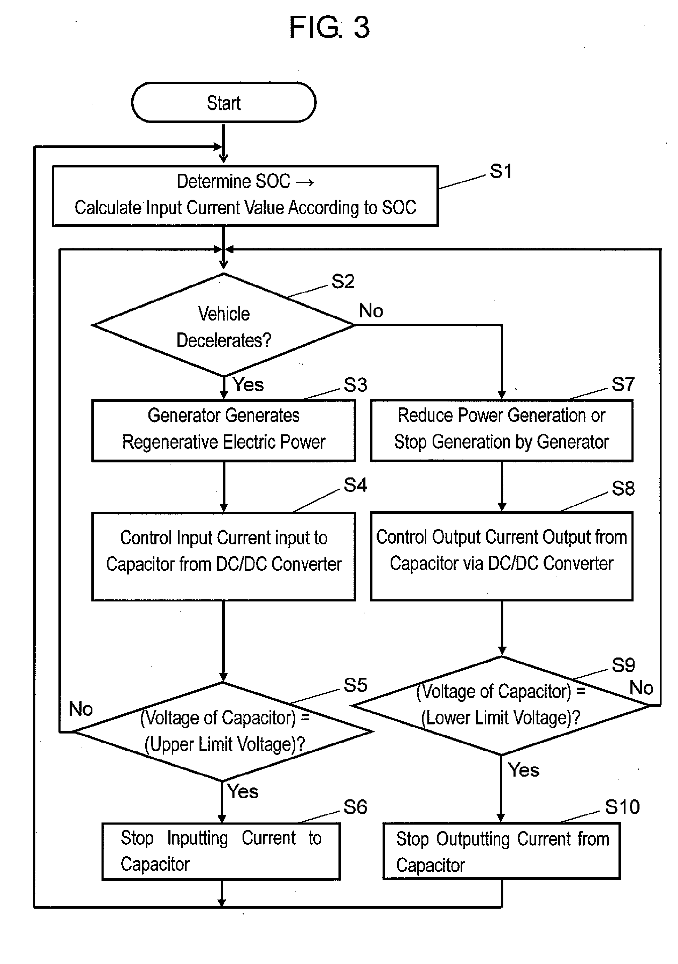

An operation of the electric power source device for vehicle will be described below with reference to Fig. 3.

Upon the vehicle starting up, controller 25 determines the SOC and starts to calculate the current value of a current that can be input to battery 13 (step S1).

Upon the vehicle starting running, controller 25 receives various data, such as the opening rate of the accelerator, the revolution of the engine, the pressing amount of the brake pedal, and the amount of fuel consumed by the engine. Controller 25 then detects whether or not the vehicle decelerates (step S2).

When the vehicle decelerates (YES at step S2), controller 25 controls generator 11 mechanically coupled to the engine to actively generate regenerative electric power according to the rotation of the engine (step S3). The regenerative electric power to be generated changes according to the revolution of the engine and the degree of the deceleration. The maximum value of current I11 accepted by battery 13 is determined as follows. Battery 13 is charged and discharged according to the balance among the electric power generated by generator 11, the power consumed by load 17, and input and output currents I21 and I22 between capacitor 21 and DC-DC converter 19. The SOC of battery 13 determining current I11 accepted by battery 13 changes according to the charging and discharging of battery 13.

Since the SOC frequently changes according to the running condition of the vehicle and load 17, the current value of current I11 accepted by battery 13 changes accordingly.

Controller 25 calculates the latest value of the current accepted by battery 13 according to the SOC, and controls DC-DC converter 19 to cause current Ib not exceeding the maximum value to flow to battery 13 from the regenerative electric power, which is the product of a large current and a voltage rising rapidly in a short time. That is, upon current I3 flowing to load 17 being properly determined, the controller controls a current input to DC-DC converter 19 to maintain input current Ib input to battery 13 to the calculated value (step S4).

Voltage detector 14 detects the voltage of battery 13. Controller 25 can control input current I21 input to DC-DC converter 19 such that the voltage applied to battery 13 can be at a predetermined level according to the determined SOC. This operation prevents battery 13 from having an excessive voltage applied thereto 13, thereby reducing gas generation and charge loss during charging. The controller can determine the predetermined voltage level to be between an open-circuit voltage of battery 13 and a voltage for charging battery 13 (for example, about 13V, which is higher than the open-circuit voltage of battery 13). The voltage applied to battery 13 can be determined to prevent battery 13 from having adverse affection on its properties or its life time.

When the voltage of capacitor 21 does not reach the upper limit voltage that can be input to capacitor 21 (NO at step S5), the controller determines that capacitor 21 still have a residual capacity, and stores more regenerative electric power while detecting conditions of the vehicle. When the voltage of capacitor 21 reaches the upper limit voltage that can be input to capacitor 21 (YES at step S5), the controller stops DC-DC converter 19 to stop inputting current I21 to capacitor 21 (step S6).

An operation of the electric power source device in the vehicle in conditions other than the deceleration, that is, in conditions of stopping, starting up, running at a constant speed, and accelerating.

As shown in Fig. 3, controller 25 detects that the vehicle is in a condition other than deceleration, based on the data, such as the opening rate of the accelerator, the revolution of the engine, the pressing amount of the brake pedal, and the amount of fuel consumed by the engine (NO at step S2).

In this condition, as described above, capacitor 21 stores the regenerative electric power charged during the deceleration of the vehicle. Controller 25 reduces the amount of electric power generated by generator 11 or stops generator 11 (step S7).

Controller 25 controls DC-DC converter 19 to discharge the electric power stored in capacitor 21 to load 17. At this moment, controller 25 controls output current I22 from DC-DC converter 19 according to the determined SOC (step S8).

At this moment, controller 25 can control DC-DC converter 19 to minimize input current Ib to battery 13. Input current Ib is controlled by controlling output current I22 of DC-DC converter 19. This operation reduces charge loss of battery 13, thereby allowing the recovered electric power to be used effectively.

Controller 25 controls output current I22 of DC-DC converter 19 such that the voltage applied to battery 13 is a predetermined voltage according to the determined SOC. As described above, this operation prevents battery 13 from having an excessive voltage applied thereto 13, thereby reducing gas generation and charge loss during charging. The predetermined voltage can be set between the open-circuit voltage of battery 13 and a charge voltage of battery 13 as described above.

Thus, the device uses the regenerative electric power effectively, and extends the life time of battery 13 as much as possible.

Upon stopping, an idling-stop vehicle stops its engine and has no electric power supplied from generator 11. When the vehicle starts up or accelerates, the controller stops generator 11, and has capacitor 21 supply the electric power stored therein to load 17 via DC-DC converter 19. This operation allows generator 11 to stop during a period when a large load is applied to the engine, i.e., when the vehicle starts up or accelerates. This operation reduces load to the engine, thereby increasing a driving force supplied from the engine to an axle.

Then, controller 25 detects the voltage of capacitor 21. Upon detecting that the voltage of capacitor 21 does not reach the predetermined lower limit voltage (NO at step S9), controller 25 controls capacitor 21 to continue to supply a current while detecting the running condition of the vehicle. Upon detecting that the voltage of capacitor 21 reaches the lower limit voltage (YES at step S9), controller 25 stops DC-DC converter 19 to have capacitor stop supplying the current (step S10).

Preferable control to the supply electric power from capacitor 21 will be described below.

When the SOC of battery 13 is 100%, that is, when battery 13 is fully charged, DC-DC converter 19 is switched to supply current I3 from capacitor 21 to load 17. At this moment, as described above with reference to Fig. 2, almost no input current Ib flows to battery 13.

When the SOC of battery 13 decreases greatly, battery 13 is preferably charged by capacitor 21 in order to prevent a further decrease of the SOC while producing the charge loss of the battery.

Even in this case, the controller minimizes input current Ib flowing to battery 13 while detecting the SOC, thereby minimizing the charge loss of battery 13.

The electric power source device for vehicle provides the following effects which have not been achieved in conventional electric power source devices.

In the conventional electric power source devices, when generator 11 generates regenerative electric power while the vehicle decelerates, the electric power obtained by subtracting the power consumed by load 17 from the regenerative electric power is applied to battery 13, thereby increasing the voltage of battery 13.

In the electric power source device for vehicle according to the embodiment, current detector 15 detects input current Ib, and supplies, to battery 13, current I11 corresponding to the SOC determined from the detected current Ib.

Thus, the controller controls DC-DC converter 19 to supply, to capacitor 21; electric power obtained by subtracting the power consumed by load 17 and the power that can minimize input current Ib to battery 13 from the regenerative electric power generated by generator 11 while the vehicle decelerates, thereby suppressing an increase of the voltage applied to battery 13.

As a result, battery 13 can receive regenerative electric power in a condition to charge the battery efficiency.

Capacitor 21 is an electric double layer capacitor, which is suitable to receive and supply a large current, but has a small power density. Therefore, conventionally, when the maximum regenerative electric power is generated while the vehicle decelerates from a maximum speed, a portion of the maximum regenerative electric power that can be recovered corresponds to the capacity determined by the shape of capacitor 21 that can be mounted to the vehicle.

In the electric power source device for vehicle according to the embodiment, the regenerative electric power which can be supplied to battery 13 is determined according to the SOC and is supplied to battery 13, and the remaining portion of the regenerative electric power is recovered in capacitor 21. This operation increases the regenerative electric power that can be recovered, thus allowing the setting of larger regenerative electric power. In addition, as described above, the voltage to be applied to battery 13 can be reduced, allowing battery 13 to receive the regenerative electric power in the condition to charge the battery efficiently. This operation reduces gas generation and charge loss in battery 13 due to excessive applied voltage, thereby extending the life time of battery 13.

In the electric power source device for vehicle according to the embodiment, the voltage applied to battery 13, that is, the voltage applied to load 17 is controlled by switching between the input and output of a current to and from DC-DC converter 19 according to the SOC. This operation stabilizes the applied voltage more than the conventional electric power source devices. As a result, a stable voltage can be supplied to motor-driven loads, such as a wiper, and bulb-type loads, such as a headlight, allowing the reduction of variations and flickering in the operating speed of the motor-driven loads and in the brightness of the bulb-type loads.

Furthermore, since the voltage applied to battery 13 can be controlled to the predetermined voltage (about 13V as described above), battery 13 exhibits its ability stably.

According to the embodiment, the controller accumulates the values of currents I11 and I12 which are input to and output from battery 13 from a full-charge as to determine the SOC. Alternatively, current detector 15 detects current I11, input to battery 13, which is either the regenerative electric power during the deceleration of the vehicle or the electric power generated by generator 11 when the vehicle is in a condition other than the deceleration. Then, the controller can refer to the current value in the characteristic diagram shown in Fig. 2 as to determine the SOC. In the latter method, the current detector detects current I11 not only while the vehicle decelerates but also before the vehicle starts decelerating as to always determine the SOC.

Thus, the electric power source device for vehicle according to the embodiment used in a vehicle including generator 11 and battery 13 includes current detector 15, DC-DC converter 19, capacitor 21, and controller 25. Current detector 15 detects currents I11 and I12 flowing to and from battery 13. Capacitor 21 is coupled to generator 11 via DC-DC converter 19. Controller 25 determines the state of charge of battery 13 based on current I11 detected by current detector 15, and detects the running condition of the vehicle, that is, at least whether or not the vehicle decelerates. Controller 25 controls current I21 input to capacitor 21 via DC-DC converter 19 based on the determined state of charge of battery 13 while the vehicle decelerates. Controller 25 determines the state of charge of battery 13 also based on current I12 detected by current detector 15, and controls current I22 output from capacitor 21 via DC-DC converter 19 based on the determined state of charge of battery 13 except during the deceleration of the vehicle.

In this electric power source device for vehicle, the controller controls current I21 that is input to capacitor 21 by DC-DC converter 19 according to the SOC and provides the following effects.

The lead-acid battery used as battery 13 has acceptable input current Ib changing according to the SOC. In order to charge the battery with a current exceeding acceptable input current Ib, an excessive voltage is applied to the lead-acid battery. The excessive voltage applied to the lead-acid battery, however, causes the electrolysis of the electrolytic solution in the lead-acid battery, thereby generating gas and causing charge loss due to the charging with a large current having a low charging efficiency. This reduces the amount of regenerative energy to be recovered, and provides adverse effects on the life time of the lead-acid battery.

The controller detects the SOC of battery 13 as to control the current input to capacitor 21 via DC-DC converter 19 such that current I11 input to battery 13 is equal to input current Ib determined according to the SOC.

This operation absorbs the regenerative electric power generated by generator 11 during the deceleration of the vehicle as current I11 according to the SOC of battery 13, current I3 to load 17, and current I21 to be input to capacitor 21 from DC-DC converter 19, thereby allowing the regenerative electric power to be recovered as much as possible.

In this case, the value of the current input to capacitor 21 from DC-DC converter 19 is controlled to be the value of input current Ib determined according to the SOC of battery 13, hence reducing the voltage applied to battery 13 to a necessary minimum voltage. As a result, battery 13 receives electric power to charge the battery efficiently as to increase the regenerative energy, and is prevented from accepting an excessive voltage, thereby minimizing the effect on its life time. The value of the current input to capacitor 21 from DC-DC converter 19 is controlled preferably such that the voltage applied to battery 13 is the predetermined voltage.

Then, the electric power source device for vehicle controls current I22 output to DC-DC converter 19 from capacitor 21 according to the SOC.

This operation allows the voltage applied to battery 13 to be a necessary minimum voltage, thereby preventing battery 13 from having an excessive voltage applied thereto when DC-DC converter 19 receives a current from capacitor 21 in the same manner as when DC-DC converter 19 supplies a current to capacitor 21. This minimizes the effect on the life of battery 13.

The controller controls the value of a current output from capacitor 21 to DC-DC converter 19 as to minimize current Ib input to battery 13.

When a current is output from capacitor 21, current Ib input to battery 13 is minimized so as to minimize the input loss caused while the current is input to battery 13, thereby allowing effective use of the energy stored in capacitor 21.

### EXEMPLARY EMBODIMENT 2

Fig. 4 is a schematic circuit block diagram of an electric power source device for vehicle according to Exemplary Embodiment 2 of the present invention. In Fig. 4, components identical to those of the device according to Embodiment 1 are denoted by the same reference numerals.

The electric power source device for vehicle according to this embodiment in a vehicle equipped with generator 11 and battery 13 includes DC-DC converter 19, capacitor 21 connected to generator 11 via DC-DC converter 19, and controller 25. Controller 25 controls second currents I21 and I22 flowing in capacitor 21 by controlling generator 11 and DC-DC converter 19.

The electric power source device for vehicle according to this embodiment shown in Fig. 4 differs from the device according to Embodiment 1 in that controller 25 controls generator 11, and that controller 25 receives data of voltage Vk from capacitor 21. This structure allows controller 25 to control the input and output of currents to and from capacitor 21 in cooperation with generator 11 and DC-DC converter 19. In addition, controller 25 receives vehicle data not shown in Fig. 4 so as to obtain more detailed condition of the vehicle, such as decelerating, stopping, starting up, running, and accelerating. This cooperative control provides the following effects.

When generator 11 generates regenerative electric power during the deceleration of the vehicle, controller 25 can operate DC-DC converter 19 at the timing synchronous with the generation of the regenerative electric power. This operation reduces an overshoot of the voltage applied to battery 13, thereby stabilizing the voltage supplied to load 17 during the deceleration of the vehicle and extending the life time of battery 13.

Controller 25 detects voltage Vk of capacitor 21 while capacitor 21 is charged. When voltage Vk is equal to the full charge voltage, more electric power cannot be supplied to capacitor 21. Therefore, controller 25 controls the amount of electric power generated by generator 11 enough to supply a current to charge battery 13. This operation prevents battery 13 from having an excessive voltage applied thereto even when capacitor 21 is fully charged, thereby extending the life time of battery 13.

At least while DC-DC converter 19 discharges the electric power stored in capacitor 21, the controller can stop the power generation of generator 11, thereby stabilizing the voltage applied to battery 13 and improving fuel efficiency.

In the electric power source devices for vehicle according to Embodiments 1 and 2, capacitor 21 is an electric double layer capacitor, but can alternatively be another electric storage element, such as an electrochemical capacitor. The capacitor can include plural electric double layer capacitors connected to each other in series, in parallel, or in series-parallel according to the power specification required.

In the electric power source devices for vehicle according to Embodiments 1 and 2, battery 13 is preferably a valve-regulated lead-acid battery or a lead-acid battery resistant to charging and discharging when the SOC decreases. Battery 13 may alternatively be a lithium secondary battery. Lithium secondary batteries can decrease the SOC. The lithium secondary battery used in the devices according to Embodiments 1 and 2 can reduce the precipitation of lithium on the negative electrode during overcharge and gas generation due to decomposition of the electrolytic solution.

The electric power source devices for vehicle according to Embodiments 1 and 2 control the current which DC-DC converter 19 exchange with capacitor 21. If the controller controls power which DC-DC converter 19 exchange with capacitor 21, the controller necessarily includes a voltage sensor, a current sensor, and a complex circuit to calculate the outputs of these sensors. Particularly if capacitor 21 is an electric double layer capacitor, both the voltage and current change due to electric power flowing in capacitor 21, thus preventing the controller from performing constant power control since electric double layer capacitors tend to receive an input current immediately after discharge.

The electric power source devices for vehicle according to embodiments 1 and 2 have a simple circuit structure and perform a simple control so as to give priority to the stability and reliability.

The lead-acid battery used as battery 13 has a property instantaneously accepting a larger current (having a high current acceptability) immediately after discharge than the input current determined according to the SOC. Therefore, the voltage applied to the lead-acid battery changes instantaneously depending on the ability of generator 11. The electric power source device for vehicle according to Embodiments 1 and 2 detect the SOC and controls a current according to the detected SOC as to restrict the current that is instantaneously received. Therefore, the controller can reduce the instantaneous change of the voltage applied to battery 13 which is caused by generator 11.

Thus, the controller controls generator 11 as well can prevent battery 13 from having an excessive voltage applied thereto when capacitor 21 is fully charged, thereby reducing the effects on the life time of the battery

As described above, the conventional electric power source device can indeed recover electric power efficiently with electric double layer capacitor 109 shown in Fig. 5. However, in order to supplying the electric power from power generation section 101 or electric double layer capacitor 109 to rechargeable battery 107, controller 111 is require to switch power generation section 101, rechargeable battery 107, and electric double layer capacitor 109, which are connected to power control unit 105, based on the voltage of rechargeable battery 107. In other words, although the conventional device can reduce unnecessary charge to rechargeable battery 107 so as to improve the life time of rechargeable battery 107, the device can not control the voltage and current input to rechargeable battery 107.

As a result, rechargeable battery 107 may receive an excessive voltage or an excessive input current, hence being charged in a condition for charging less efficiently and having a life time reduced. In addition, the power control unit for switching the large current generated by braking requires high reliability, and the power control unit requires a high cost.

The device according to the embodiments stores the regenerative energy in the battery in a condition for charging the battery efficiently, thereby increasing the amount of regenerative energy and extending the life time of the battery

According to the embodiments, in a vehicle which recovers a braking energy generated at least during deceleration as regenerative electric power, and which supplies the electric power to a load, the device recover the regenerative electric power as much as possible. In addition, the device prevents the battery in the vehicle from having an unnecessary excessive voltage applied thereto, hence providing the battery with a long life time.

The electric power source devices for vehicle according to Embodiments 1 and 2 are mounted to vehicles with engines, but can be mounted to another vehicle, such as a hybrid electric vehicle and an electric vehicle, including a generator

### INDUSTRIAL APPLICABILITY

An electric power source device for vehicle according to the present invention stores electric power generated by a generator as much as possible and utilizes the stored power, thereby improving fuel efficiency of the vehicle.

The device reduces adverse effects on a life time of a battery which have been caused by a high voltage and a large current input to the battery for a short time, for example, when the battery receives the regenerative electric power. Thus, the electric power source device for vehicle according to the present invention is particularly useful for vehicle having a regenerative function.

## Claims

1. An electric power source device for vehicle adapted to be used in a including a generator and a battery, the electric power source device comprising:
a current detector for detecting a first current flowing in the battery;
a DC-DC converter;
a capacitor connected to the generator via the DC-DC converter; and
a controller operable to
determine a state of charge of the battery based on the first current detected by the current detector,
detect whether or not the vehicle decelerates, and
control, according to the determined state of charge of the battery, a second input current input to the capacitor via the DC-DC converter while the vehicle decelerates.

2. The electric power source device according to claim 1, wherein the controller controls the second input current such that a first input current which is the first current out of regenerative electric power generated by the generator and which is input to the battery has a current value according to the determined state of charge of the battery.

3. The electric power source device according to claim 1, further comprising a voltage detector for detecting a voltage of the battery, wherein the controller controls the second input current such that the voltage is at a predetermined level determined according to the state of charge of the battery.

4. An electric power source device for vehicle adapted to be used in a vehicle including a generator and a battery, the electric power source device comprising:
a current detector for detecting a first current flowing in the battery;
a DC-DC converter;
a capacitor connected to the generator via the DC-DC converter; and
a controller operable to
determine a state of charge of the battery based on the first current detected by the current detector,
detect whether or not the vehicle decelerates, and
control, based on the determined state of charge of the battery, a second output current output from the capacitor via the DC-DC converter while the vehicle does not decelerate.

5. The electric power source device according to claim 4, wherein the controller controls the second output current such that a first input current out of a discharging current output from the capacitor has a current value determined according to the detected state of charge of the battery, the first input current being the first current and input to the battery.

6. The electric power source device according to claim 4, further comprising a voltage detector for detecting a voltage of the battery, wherein the controller controls the second output current such that the voltage is at a predetermined level determined according to the state of charge of the battery.

7. The electric power source device according to claim 1 or 4, wherein the controller determines the state of charge of the battery by accumulating the first current detected by the current detector.

8. The electric power source device according to claim 1 or 4, wherein the controller determines the state of charge of the battery based on a result detected by the current detector obtained from the first input current flowing when the battery receives regenerative electric power generated while the vehicle decelerates or electric power generated while the vehicle does not decelerates.

9. An electric power source device for vehicle adapted to be used in a vehicle including a generator and a battery, the electric power source device comprising:
a current detector for detecting a first current flowing in the battery;
a DC-DC converter;
a capacitor connected to the generator via the DC-DC converter; and
a controller operable to control a second output current output from the capacitor via the DC-DC converter as to minimize a first input current flowing to the battery when the capacitor discharges regenerative electric power generated while the vehicle decelerates and stored in the capacitor.

10. An electric power source device for vehicle adapted to be used in a vehicle including a generator and a battery, the electric power source device comprising:
a DC-DC converter;
a capacitor connected to the generator via the DC-DC converter; and
a controller operable to control the generator and the DC-DC converter to control a second current flowing to the capacitor.

11. The electric power source device according to claim 10, wherein the controller is operable to
detect a running condition of the vehicle, and
supply a second input current to the capacitor via the DC-DC converter by controlling the DC-DC converter synchronously while the generator generates power while the vehicle decelerates.

12. The electric power source device according to claim 10, wherein the controller is operable to
detect an amount of charge of the capacitor, and
reduce an amount of electric power generated by the generator when detecting that the capacitor is fully charged.

13. The electric power source device according to claim 10, wherein the controller is operable to
control the generator to stop generating electric power while the capacitor outputs a second output current via the DC-DC converter, and
allows the generator to generate electric power when the capacitor does not output the second output current via the DC-DC converter.

## Amended claims

### Amended claims in accordance with Rule 137(2) EPC.

**1.** (Amended) An electric power source device for vehicle adapted to be used in a including a generator and a battery, the electric power source device comprising:
a current detector for detecting a first current flowing in the battery;
a DC-DC converter;
a capacitor connected to the generator via the DC-DC converter; and
a controller operable to
determine a state of charge of the battery based on the first current detected by the current detector,
detect whether or not the vehicle decelerates, and control,
a second input current input to the capacitor via the DC-DC converter while the vehicle decelerates, such that a first input current which is the first current out of regenerative electric power generated by the generator and which is input to the battery has a current value according to the determined state of charge of the battery.

**2.** (Cancelled)

**3.** The electric power source device according to claim 1, further comprising a voltage detector for detecting a voltage of the battery, wherein the controller controls the second input current such that the voltage is at a predetermined level determined according to the state of charge of the battery.

**4.** (Amended) An electric power source device for vehicle adapted to be used in a vehicle including a generator and a battery, the electric power source device comprising:
a current detector for detecting a first current flowing in the battery;
a DC-DC converter;
a capacitor connected to the generator via the DC-DC converter; and
a controller operable to
determine a state of charge of the battery based on the first current detected by the current detector,
detect whether or not the vehicle decelerates, and control
a second output current output from the capacitor via the DC-DC converter while the vehicle does not decelerate.̅, such that a first input current out of a discharging current output from the capacitor has a current value determined according to the detected state of charge of the battery the first input current being the first current and input to the battery.

**5.** (Cancelled)

**6.** The electric power source device according to claim 4, further comprising a voltage detector for detecting a voltage of the battery, wherein the controller controls the second output current such that the voltage is at a predetermined level determined according to the state of charge of the battery.

**7.** The electric power source device according to claim 1 or 4, wherein the controller determines the state of charge of the battery by accumulating the first current detected by the current detector.

**8.** The electric power source device according to claim 1 or 4, wherein the controller determines the state of charge of the battery based on a result detected by the current detector obtained from the first input current flowing when the battery receives regenerative electric power generated while the vehicle decelerates or electric power generated while the vehicle does not decelerates.

**9.** An electric power source device for vehicle adapted to be used in a vehicle including a generator and a battery, the electric power source device comprising:
a current detector for detecting a first current flowing in the battery;
a DC-DC converter;
a capacitor connected to the generator via the DC-DC converter; and
a controller operable to control a second output current output from the capacitor via the DC-DC converter as to minimize a first input current flowing to the battery when the capacitor discharges regenerative electric power generated while the vehicle decelerates and stored in the capacitor.

**10.** An electric power source device for vehicle adapted to be used in a vehicle including a generator and a battery, the electric power source device comprising:
a DC-DC converter;
a capacitor connected to the generator via the DC-DC converter; and
a controller operable to control the generator and the DC-DC converter to control a second current flowing to the capacitor.

**11.** The electric power source device according to claim 10, wherein the controller is operable to
detect a running condition of the vehicle, and
supply a second input current to the capacitor via the DC-DC converter by controlling the DC-DC converter synchronously while the generator generates power while the vehicle decelerates.

**12.** The electric power source device according to claim 10, wherein the controller is operable to
detect an amount of charge of the capacitor, and
reduce an amount of electric power generated by the generator when detecting that the capacitor is fully charged.

**13.** The electric power source device according to claim 10, wherein the controller is operable to
control the generator to stop generating electric power while the capacitor outputs a second output current via the DC-DC converter, and
allows the generator to generate electric power when the capacitor does not output the second output current via the DC-DC converter.
